(19) Europäisches Patentamt

European Patent Office

Office européen des brevets

(11) **EP 1 324 101 A1**

(12) **EUROPEAN PATENT APPLICATION**
published in accordance with Art. 158(3) EPC

(43) Date of publication:
**02.07.2003 Bulletin 2003/27**

(21) Application number: **01963439.3**

(22) Date of filing: **05.09.2001**

(51) Int Cl.$^7$: **G02F 1/01**

(86) International application number:
**PCT/JP01/07698**

(87) International publication number:
**WO 02/021196 (14.03.2002 Gazette 2002/11)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **07.09.2000 JP 2000272037**
**18.07.2001 JP 2001218096**

(71) Applicant: **MITSUBISHI DENKI KABUSHIKI KAISHA**
**Tokyo 100-8310 (JP)**

(72) Inventors:
• **NISHIOKA, Tsuyoshi**
  **Chiyoda-ku, Tokyo 100-8310 (JP)**
• **HASEGAWA, Toshio**
  **Chiyoda-ku, Tokyo 100-8310 (JP)**
• **ISHIZUKA, Hirokazu**
  **Chiyoda-ku, Tokyo 100-8310 (JP)**

(74) Representative: **Gleiter, Hermann**
**Pfenning, Meinig & Partner GbR**
**Mozartstrasse 17**
**80336 München (DE)**

(54) **OPTICAL SIGNAL TRANSMITTER AND OPTICAL SIGNAL TRANSMITTING METHOD**

(57)     An optical system of a transmission device for quantum cryptograph includes a Faraday mirror and a phase modulator. The phase modulator has multiple refractivity, and it is inevitable to lose an extreme amount of input due to the configuration of the optical path. As a result, the S/N ratio is reduced, which makes an adjustment at start time difficult. A light pulse incident to the transmission device includes two light pulses of the TE polarization wave and the TM polarization wave for a phase modulator 8. The light pulse of the TE polarization wave is changed to the TM polarization wave by a Faraday mirror 7, and the TM polarization wave is changed to the TE polarization wave by rotating the polarization plate and reflecting by the Faraday mirror 7, and output from the transmission device. Two polarization beam splitters 5 and 6 are used so that the light pulse of the TM polarization wave should bypass the phase modulator 8. Only light pulse of the TE polarization wave is carried to the phase modulator 8.

Fig. 1

**Description**

Technical Field

The present invention relates to a transmission device for the use of, for instance, a quantum cryptography device of Faraday mirror system.

Background Art

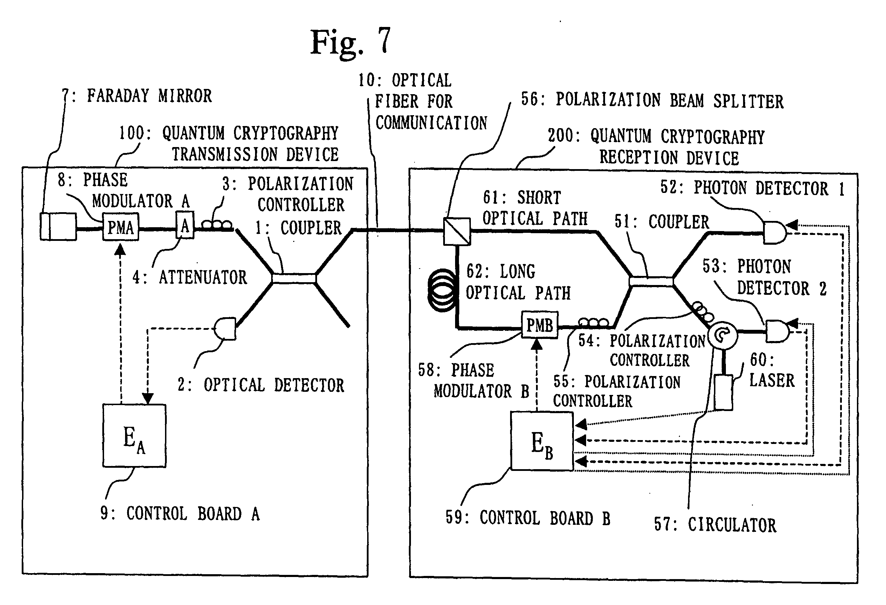

Fig. 7 shows a configuration of a quantum cryptography device of a conventional Faraday mirror system shown in, for example, G. Ribordy, et.al. "Automated 'plug & play' quantum key distribution," ELECTRONICS LETTERS Vol. 34 No. 22 pp.2116-2117 (1998) or the International Patent Publication Gazette WO98/10560 "QUANTUM CRYPTOGRAPHY DEVICE AND METHOD." In Fig. 7, a quantum cryptography transmission device 100 includes: a coupler 1 connected to an optical fiber 10 for communication, an optical detector 2 for detecting a light pulse input to the coupler 1 from the optical fiber 10 for communication, a polarization controller 3 for adjusting a polarization mode of the input light pulse, an attenuator 4 for attenuating the strength of the light pulse and reducing the strength of the light pulse output from the quantum cryptography device to quantum level (0.1 photon per pulse), a Faraday mirror 7 which reflects the input pulse by rotating its polarization plate by 90 degrees, namely, reflects an input pulse of a TE polarization wave as the light pulse of a TM polarization wave and an input pulse of the TM polarization wave as the light pulse of the TE polarization wave, a phase modulator 8 for phase modulating the pulse which passes through the phase modulator 8, and a control board 9. Here, the TE polarization wave (TRANSVERSE ELECTRIC POLARIZATION WAVE) is a lightwave of which vibration direction of electric vector is vertical to a plane of incidence and the vibration direction of magnetic vector is within the plane of incidence. The TM polarization wave (TRANSVERSE MAGNETIC POLARIZATION WAVE) is a lightwave of which vibration direction of magnetic vector is vertical to a plane of incidence and the vibration direction of electric vector is within the plane of incidence. A quantum cryptography reception device 200 includes a coupler 51, a photon detector 52, a photon detector 53, a polarization controller 54, a polarization controller 55, a polarization beam splitter 56, a circulator 57, a phase modulator 58, a control board 59, a laser 60, a short optical path 61, and a long optical path 62.

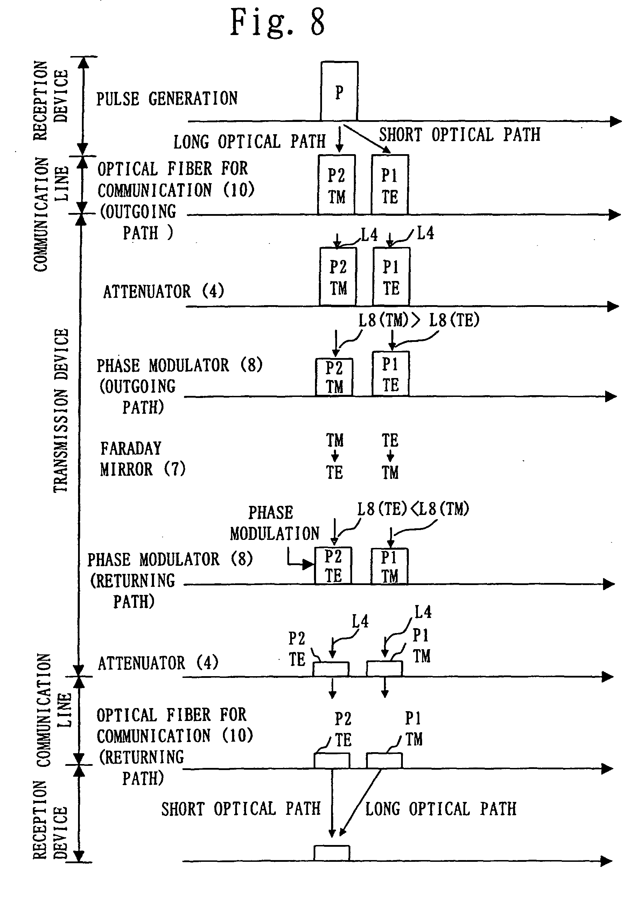

In the following, the operation will be explained referring to Fig. 8. The quantum cryptography reception device 200 in Fig. 7 generates a light pulse P by the laser 60. The light pulse P is split by the coupler 51 and carried into the short optical path 61 and the long optical path 62. After a polarized plane of the light pulse in the long optical path 62 is adjusted by the polarization controller 55, the light pulse is carried through the phase modulator 58, and output to the optical fiber 10 for communication by the polarization beam splitter 56. The light pulse in the short optical path 61 is also output to the optical fiber 10 for communication. Since the long optical path 62 is longer than the short optical path 61, two different pulses P1 and P2 are output to the optical fiber 10 for communication. Namely, the light pulses P1 and P2 having two different polarization modes are output to the optical fiber 10 for communication.

The light pulses P1 and P2 having two different polarization modes are input to the quantum cryptography transmission device 100 through the optical fiber 10 for communication with staggered timings. The light pulses P1 and P2 input through the optical fiber 10 for communication are divided into two by the coupler 1, respectively, and ones of the divided light pulses P1 and P2 are detected by the optical detector 2. The phase modulator 8 modulates only the light pulse P2 out of the light pulses P1 and P2 according to the timing of detecting the light pulses by the optical detector 2. Polarization planes of the others of the light pulses P1 and P2 divided by the coupler 1 are adjusted by the polarization controller 3 so that the phase modulator 8 works optimally. At this time, the first light pulse P1 out of the two light pulses P1 and P2 input to the quantum cryptography transmission device 100 with staggered timings is adjusted so as to have a polarization mode of the TE polarization wave. Accordingly, the second light pulse P2 becomes to have a polarization mode of a TM polarization wave. The light pulse which passes through the polarization controller 3 and the attenuator 4 to direct to the Faraday mirror 7 is carried through the phase modulator 8 and input to the Faraday mirror 7. The light pulse input to the Faraday mirror 7 having the polarization mode of the TE polarization wave is reflected as the light pulse of the TM polarization wave, and on the contrary, the light pulse of the TM polarization wave is reflected as the light pulse of the TE polarization wave. The reflected light pulse is carried through the phase modulator 8 again. The phase modulator 8 is adjusted its timing by the control board 9 so that the phase modulator 8 phase modulates only the second light pulse P2 out of the two light pulses P1 and P2 which are reflected by the Faraday mirror 7 and carried through the phase modulator 8. The phase modulated light pulse P2 is transmitted toward the optical fiber 10 for communication as if it flows backward through the optical path of the incidence. The two light pulses P1 and P2 which pass through the phase modulator 8 after reflected by the Faraday mirror 7 are directed to the attenuator 4. The attenuator 4 attenuates the strength of the light pulses which is phase modulated by the phase modulator 8 to the quantum level (0.1 photon per pulse). Thereafter, the light pulses pass serially through the polarization controller 3 and the coupler 1, and is transmitted to the optical fiber 10 for communication.

In the conventional quantum cryptography transmission device of the Faraday mirror system, the light pulse input to the device passes through the same optical path as an outgoing path and a returning path; namely, the light pulse passes through the phase modulator 8 twice. In addition, since the light pulses having two different modes: the polarization mode of the TE polarization wave in which loss of the light pulse is relatively small; and the polarization mode of the TM polarization wave in which loss is very large passes through the phase modulator 8, so that a loss L of the optical strength becomes extremely large. On adjusting the quantum cryptography device, the attenuator 4 is removed and each part is adjusted to increase an S/N ratio (signal/noise ratio), however, there is a problem that the S/N ratio at adjusting time of the quantum cryptography device becomes extremely small when the loss L of the optical strength is large.

Hereinafter, the loss of the optical strength will be explained.

In Fig. 8, L4 shows a loss of the strength of each light pulse when the light pulses P1 and P2 pass through the attenuator 4, and L8 shows a loss of the strength of each light pulse when the light pulses P1 and P2 pass through the phase modulator 8. In Fig. 8, the loss which is received when the light pulses P1 and P2 pass through each element is shown as an arrow L.

For instance, the strength of the light pulse input from the optical fiber 10 for communication is supposed as S, the loss of the TE polarization wave of the phase modulator 8 as L8 (TE), the loss of the TM polarization wave of the phase modulator 8 as L8 (TM), the other losses as LZ, and their concrete values are:

Here, the other losses include L4.

S = 50dB
L8 (TE) = 6dB
L8 (TM) = 30dB
LZ = 2dB

When the whole loss of the optical strength is supposed as L, L can be obtained by the following equation:

$$L = L8 \text{ (TE)} + LZ + L8 \text{ (TM)} + LZ$$

$$= 6 + 2 + 30 + 2$$

$$= 40\text{dB}$$

At this time, when the strength of the light pulse is supposed as M on adjusting the quantum cryptography device with removing the attenuator 4, M is obtained by:

$$M = S - L = 50 - 40 = 10\text{dB}$$

As shown in the equation, the larger the loss L becomes, the less the strength M of the light pulse becomes, and the S/N ratio is degraded, which makes the adjustment difficult.

The present invention aims to provide the quantum cryptography transmission device in which the loss of the optical strength is small on adjusting quantum cryptograph.

Disclosure of the Invention

According to the present invention, a transmission device for an optical signal includes:

a first optical path for receiving the optical signal, being an optical path of the optical signal, and transmitting the optical signal;

first and second polarization beam splitters provided at the first optical path for splitting the optical signal from the first optical path;

a second optical path provided between the first and second polarization beam splitters for being an optical path of the optical signal split by the first and second polarization splitters; and

a phase modulator provided at the second optical path for phase modulating the optical signal.

The transmission device for the optical signal further includes:

a mirror provided at an end of the first optical path for changing a polarization mode of the optical signal and reflecting the optical signal, and

the first optical path is used for an outgoing path and a returning path of the optical signal; and

the second optical path is used for an outgoing path and a returning path of the optical signal which is split by the first and second polarization beam splitters.

The first optical path receives the optical signal having a light pulse of a TE polarization wave and a light pulse of a TM polarization wave,

the first and second polarization beam splitters split the light pulse of the TE polarization wave, and

the phase modulator phase modulates the light pulse of the TE polarization wave.

According to the present invention, a transmission method for an optical signal includes:

a splitting step for splitting a TE polarization wave from the optical signal which flows a first optical path and has the TE polarization wave and a TM polarization wave to forward to a second optical path;

a phase modulating step for phase modulating the TE polarization wave which is split to forward to the second optical path by the splitting step; and

a combining step for combining the TE polarization wave phase modulated by the phase modulating step to the first optical path.

The transmission method for the optical signal further includes an outgoing path step and a returning path step for making the optical signal go and return through the optical path by reflecting the optical signal, and

the phase modulating step is performed at the returning path step.

According to the present invention, a transmission device for an optical signal includes:

an optical transmitting/receiving path for receiving the optical signal, being an optical path of the optical signal, and transmitting the optical signal;

a polarization beam splitter provided at an end of the optical transmitting/receiving path for splitting the optical signal from the optical transmitting/receiving path;

an optical looping path connected to the polarization beam splitter at both ends for being an optical path which loops the optical signal split by the polarization beam splitter to the polarization beam splitter;

a phase modulator provided at the optical looping path for phase modulating the optical signal; and

a polarization mode changer provided at the optical looping path for changing a polarization mode of the optical signal.

The polarization mode changer includes a fast/slow coupler for changing the polarization mode by connecting a fast axis and a slow axis of a polarization wave axis of an optical fiber;

the optical transmitting/receiving path is used for an outgoing path and a returning path for the optical signal; and

the optical looping path is used for an outgoing path and a returning path for the optical signal split by the polarization beam splitter.

The optical transmitting/receiving path receives the optical signal having a light pulse of a TE polarization wave and a light pulse of a TM polarization wave, and

the polarization beam splitter splits the light pulse of the TE polarization wave and the light pulse of the TM polarization wave, and the phase modulator phase modulates the light pulse of the TE polarization wave.

According to the present invention, a transmission method for an optical signal includes:

a splitting step for splitting the optical signal which flows an optical transmitting/receiving path and having a TE polarization wave and a TM polarization wave and outputting the TE polarization wave and the TM polarization wave to one end and the other end of an optical looping path;

a phase modulating step for phase modulating the TE polarization wave split by the splitting step in the optical looping path; and

a combining step for combining the optical signal output from the one end of the optical looping path and the optical signal output from the other end of the optical looping path.

The transmission method for the optical signal further includes an outgoing path step and a returning path step for making the optical signal go and return through the optical transmitting/receiving path, and a loop flow step for looping the optical signal in the optical looping path, and the phase modulating step is performed at the loop flow step.

Brief Explanation of the Drawings

Fig. 1 shows a configuration of an optical system of a quantum cryptography transmission device of Faraday mirror system according to the preferred embodiment of the present invention.
Fig. 2 is a flowchart showing the operation of Fig. 1.
Fig. 3 shows a status of light pulses.
Fig. 4 shows a time sequential status of the light pulse.
Fig. 5 shows a configuration of an optical system according to the second embodiment.
Fig. 6 shows a configuration of an optical system according to the second embodiment.
Fig. 7 shows a general configuration of a quantum cryptography device of a conventional Faraday mirror system.

Fig. 8 shows a status of light pulses in the quantum cryptography transmission device of a conventional Faraday mirror system.

Fig. 9 shows a configuration of an optical system according to the third embodiment.

Fig. 10 is a flowchart showing the operation of Fig. 9.

Preferred Embodiments for Carrying out the Invention

Embodiment 1.

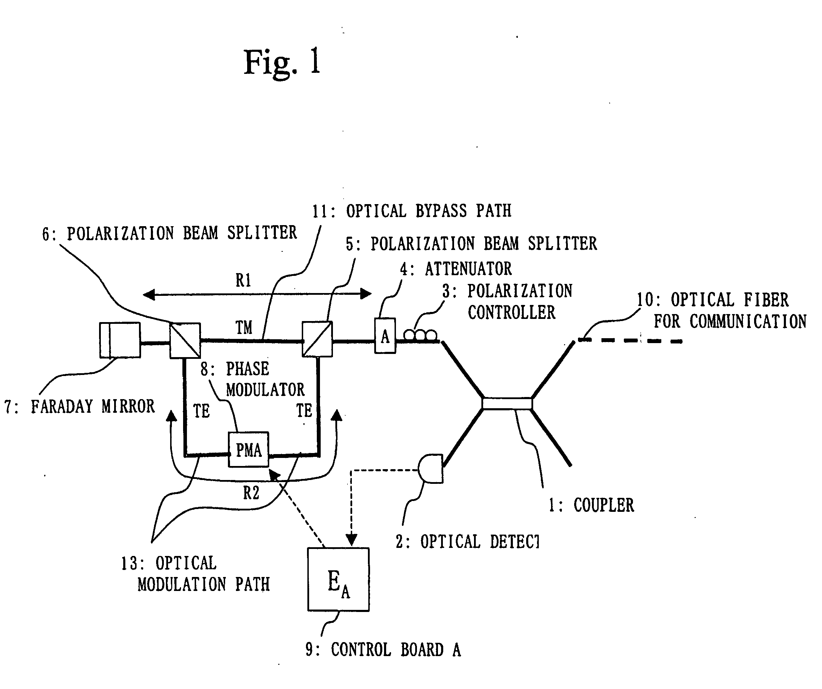

Fig. 1 shows a configuration of an optical system of a quantum cryptography transmission device 100 within a quantum cryptography device of a Faraday mirror system. In the quantum cryptography transmission device of the Faraday mirror system according to the present embodiment, the optical paths to go out and to return are made different within the transmission device by using two polarization beam splitters.

In the figure, the quantum cryptography transmission device 100 includes a coupler 1 connected to an optical fiber 10 for communication, an optical detector 2 for detecting a light pulse input from the optical fiber 10 for communication, a polarization controller 3 for controlling the polarization mode of the input light pulse, an attenuator 4 for attenuating the strength of the light pulse and reducing the strength of the light pulse output from the quantum cryptography device to the quantum level (0.1 photon per pulse), polarization beam splitters 5 and 6 for automatically switching the light pulse according to the polarization mode; in case of the light pulse of the TE polarization wave, switching to an optical modulation path 13 which passes through a phase modulator 8, and in case of the light pulse of the TM polarization wave, switching to an optical bypass path 11 which bypasses the light pulse of the TM polarization wave, a Faraday mirror 7 which reflects the input pulse with rotating its polarization plate by 90 degrees; namely, reflects the input pulse of the TE polarization wave as the light pulse of the TM polarization wave, and reflects the input pulse of the TM polarization wave as the light pulse of the TE polarization wave, and the phase modulator 8 for phase modulating the pulse which passes through the phase modulator 8. A first optical path R1 connects the attenuator 4, the polarization beam splitter 5, the polarization beam splitter 6, and the Faraday mirror 7. A second optical path R2 connects the polarization beam splitter 5, the phase modulator 8, and the polarization beam splitter 6. The second optical path R2 is placed parallel to the first optical path R1. The phase modulator 8 is placed at the second optical path R2. Other configuration of the figure is the same as Fig. 7.

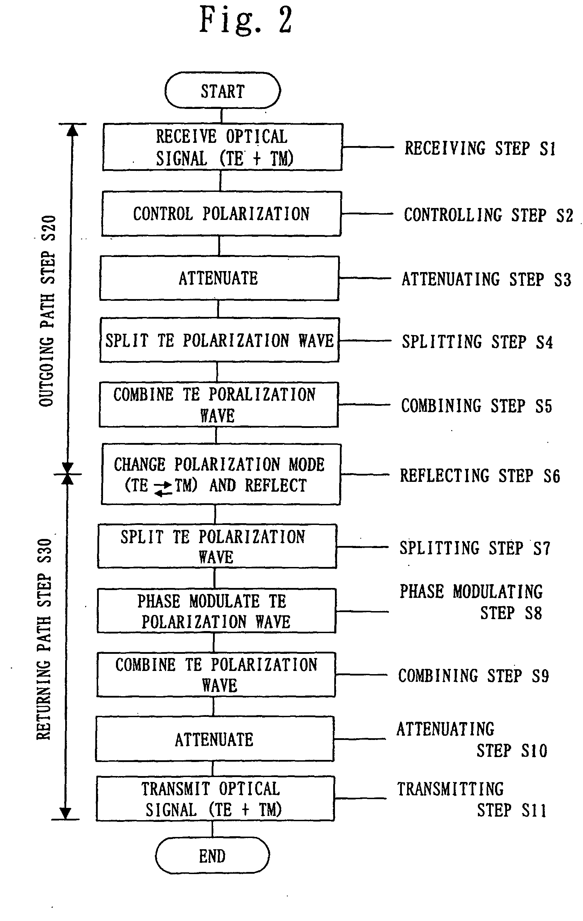

In the following, the operation will be explained referring to Figs. 2, 3, and 4.

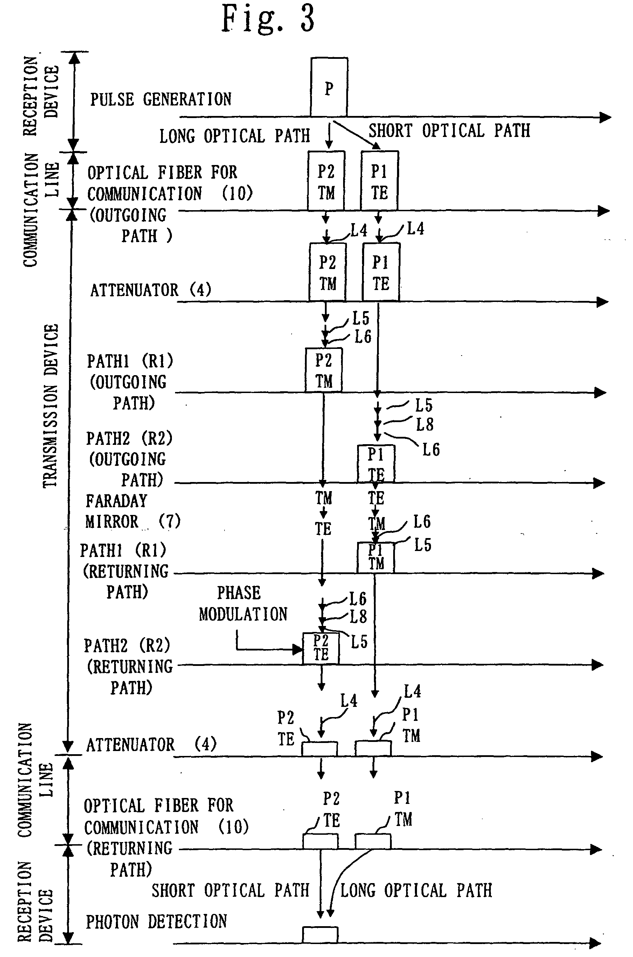

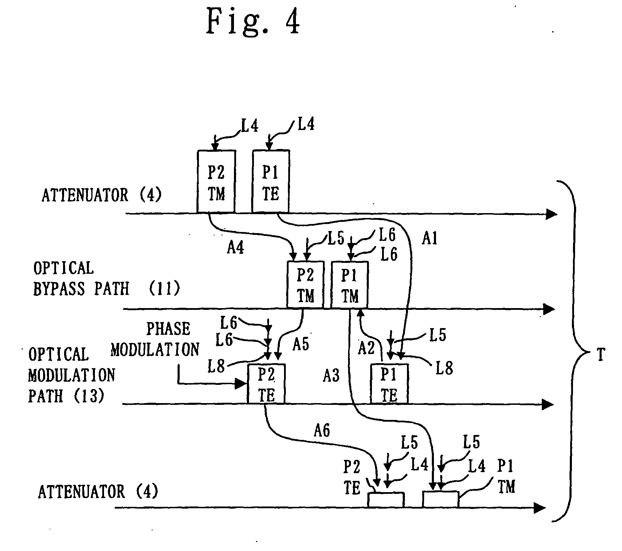

Fig. 2 is a flowchart showing the operation of the quantum cryptography transmission device 100. Fig. 3 shows status of the light pulses at each section. Fig. 4 shows time-sequential status of the light pulse which passes through the optical bypass path 11 and the optical modulation path 13. In Figs. 3 and 4, P, P1, and P2 show pulses. Arrows L4, L5, L6, and L8 above each pulse respectively show losses of the optical strength at the attenuator 4, the polarization beam splitter 5, the polarization beam splitter 6, and the phase modulator 8.

(1) Step S20 for an outgoing path

First, two light pulses P1 and P2 having two different polarization modes are input to the quantum cryptography transmission device 100 of Fig. 1 through the optical fiber 10 for communication with staggered timings (S1). The light pulses P1 and P2 input through the optical fiber 10 for communication are split into two by the coupler 1, and ones of the light pulses P1 and P2 split by the coupler 1 are detected by the optical detector 2. The phase modulator 8 modulates only the light pulse P2 out of the light pulses P1 and P2 according to the timings of detecting the light pulses by the optical detector 2. The others of the light pulses of P1 and P2 split by the coupler 1 are adjusted their polarization plates so that the phase modulator 8 works optimally (S2). At this time, the first light pulse P1 out of the two light pulses P1 and P2 input to the quantum cryptography transmission device 100 with the staggered timings is adjusted so as to become the polarization mode of the TE polarization wave. Accordingly, the second light pulse becomes the polarization mode of the TM polarization wave. Then, the attenuator 4 attenuates the strength of the light pulse (S3). The light pulse directing to the Faraday mirror 7 through the polarization controller 3 is selected by the polarization beam splitter 5 to re-direct the light pulse P1 having the polarization mode of the TE polarization wave to the optical modulation path 13 which passes through the phase modulator 8, and the light pulse P2 having the polarization mode of the TM polarization wave to the optical bypass path 11 directing to the polarization beam splitter 6 (S4). The two light pulses P1 and P2 which pass through different optical paths are combined by the polarization beam splitter 6 and input to the Faraday mirror 7 (S5). The light pulse input to the Faraday mirror 7 is reflected; namely, the light pulse having the polarization mode of the TE polarization wave is reflected as the light pulse P1 having the polarization mode of the TM polarization wave, and the light pulse having the polarization mode of the TM polarization wave is reflected as the light pulse P2 having the polarization mode of the TE polarization wave (S6).

(2) Step S30 for a returning path

The reflected light pulses P1 and P2 are selected by the polarization beam splitter 6 to re-direct the light pulse P2 of the TE polarization wave to the optical modulation path 13 which passes through the phase modulator 8, and the light pulse P1 of the TM polarization wave to the optical bypass path 11 directing to the polarization beam splitter 5 (S7). The phase modulator 8 is adjusted its timing by the control board 9 to phase modulate only the light pulse P2 which is reflected by the Faraday mirror 7 and passes through the phase modulator 8 (S8). The light pulse P1 which is not phase modulated and the phase modulated light pulse P2 are transmitted toward the optical fiber 10 for communication as it returns through the optical path of incidence. The two light pulses P1 and P2 which pass through the different optical paths after reflected by the Faraday mirror 7 are combined by the polarization beam splitter 5 and directed to the attenuator 4 (S9). The attenuator 4 attenuates the strength of the light pulse phase modulated by the phase modulator 8 to the quantum level (0.1 photon per pulse) (S10). Thereafter, the light pulse passes through the polarization controller 3 and the coupler 1, and is transmitted to the optical fiber 10 for communication (S11).

As shown in Fig. 4, only the light pulse of the TM polarization wave passes through the optical bypass path 11 which is a part of the first optical path R1. On the other hand, only the light pulse of the TE polarization wave passes through the optical modulation path 13 which is a part of the second optical path R2. The order of passing of the light pulses is shown by arrows A1, A2, and A3 of Fig. 4. And further, the light pulses pass in the order of arrows A4, A5, and A6.

Here, the loss of the optical strength will be explained.

For instance, the strength of the light pulse input from the optical fiber 10 for communication is supposed as S, the loss of the strength of the light pulse due to the polarization beam splitter 5 as L5, the loss of the strength of the light pulse due to the polarization beam splitter 6 as L6, the loss of the strength of the light pulse due to the phase modulator 8 as L8, other losses as LZ, and their concrete values are shown below.

The other loses LZ includes the loss L4 of the strength of the light pulse due to the attenuator 4 of Fig. 4, and so forth. Further, in Fig. 4, the loss which is received during the light pulses P1 and P2 pass through each part is shown by an arrow L.

S = 50dB
L5 = 5dB
L6 = 5dB
L8 = 6dB
LZ = 2dB

When the whole loss of the optical strength is supposed as L, L can be obtained by the following expression:

$$L = (L5 + L6) + LZ + (L6 + L8 + L5) + LZ$$

$$= 5 + 5 + 2 + 5 + 6 + 5 + 2$$

$$= 30dB$$

As described above, there are two light pulses to enter the transmission device; the light pulses of the TE polarization wave which pass through the phase modulator 8 and the TM polarization wave. These light pulses are reflected by the Faraday mirror 7, so that the TE polarization wave is reflected as the TM polarization wave, and the TM polarization wave is reflected as the TE polarization wave with rotating its polarization plate and are output from the transmission device. Conventionally, one light pulse passes through the phase modulator 8 in two different statuses; the TE polarization wave and the TM polarization wave. However, since the transmission factor of the phase modulator 8 for the TM polarization wave is low, the incident pulse is output with reduced by, for example, 40dB.

In the present embodiment, the phase modulator 8 is bypassed by the light pulse of the TM polarization wave using the two polarization beam splitters 5 and 6. Only the light pulse of the TE polarization wave is carried to the phase modulator 8. In this way, the reduction of the incident pulse can be limited to 30dB, which improves the S/N ratio by 10dB.

As discussed above, according to the present embodiment, the optical path within the quantum cryptography transmission device 100 is separated for the outgoing and returning paths using the two polarization beam splitters 5 and 6, and the phase modulator 8 is placed at either path of the optical paths in the quantum cryptography transmission device of Faraday mirror system.

In this embodiment, however, the light pulse is split by the two polarization beam splitters 5 and 6 and passes through the quantum cryptography transmission device using different paths for outgoing and returning. Accordingly, the light pulse passes through the phase modulator 8 only once and by the form of only the light pulse having the polarization mode of the TE polarization wave, so that the loss of the incident pulse due to the quantum cryptography transmission device 100 becomes 30dB when the attenuator 4 is removed, which prevents the loss of 10dB compared with the loss due to the quantum cryptography transmission device 100 in the conventional art. This means, the S/N ratio is improved by 10dB at adjusting time, which enables to adjust the quantum cryptography device easily.

Embodiment 2.

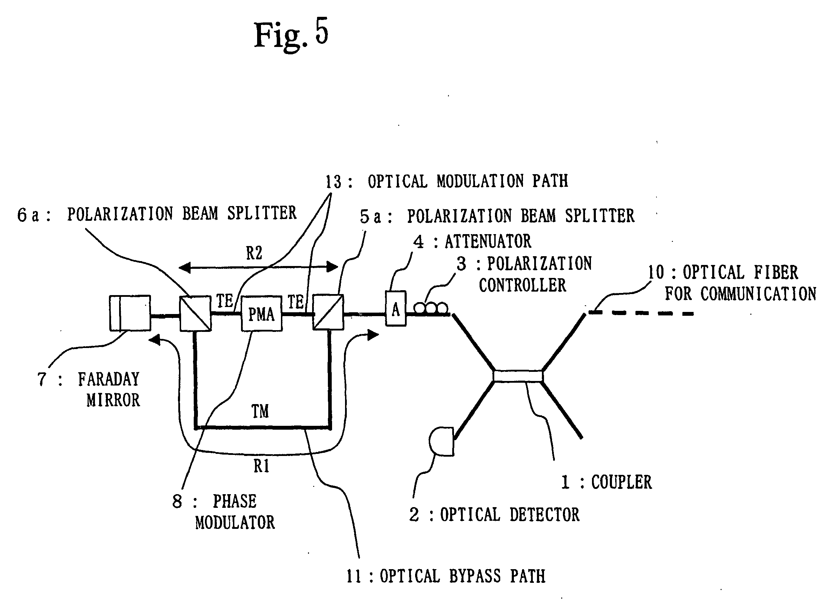

In Fig. 1, the polarization beam splitters 5 and 6 which reflect the TE polarization wave and pass the TM polarization wave are used. As shown in Fig. 5, another polarization beam splitter 5a which reflects the TM polarization wave and another polarization beam splitter 6a which passes the TE polarization wave can be used.

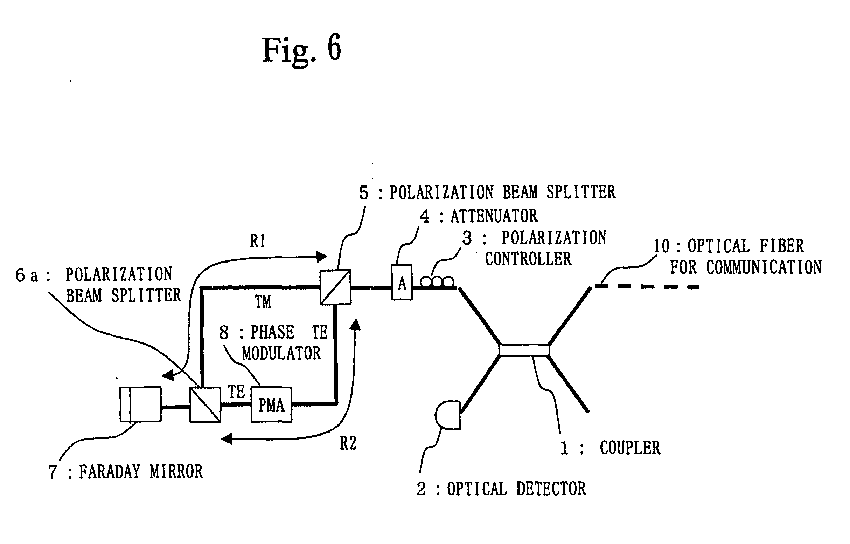

In another way, as shown in Fig. 6, a combination of the polarization beam splitter 5 which passes the TM polarization wave and the polarization beam splitter 6a which passes the TE polarization wave can be used. Yet further, another combination of the polarization beam splitter 5a which passes the TE polarization wave and the polarization beam splitter 6 which passes the TM polarization wave can be used, which is not illustrated in the figure.

The Faraday mirror 7 is used in Fig. 1, however, another component can be used as long as it has the same function as the Faraday mirror 7.

Embodiment 3.

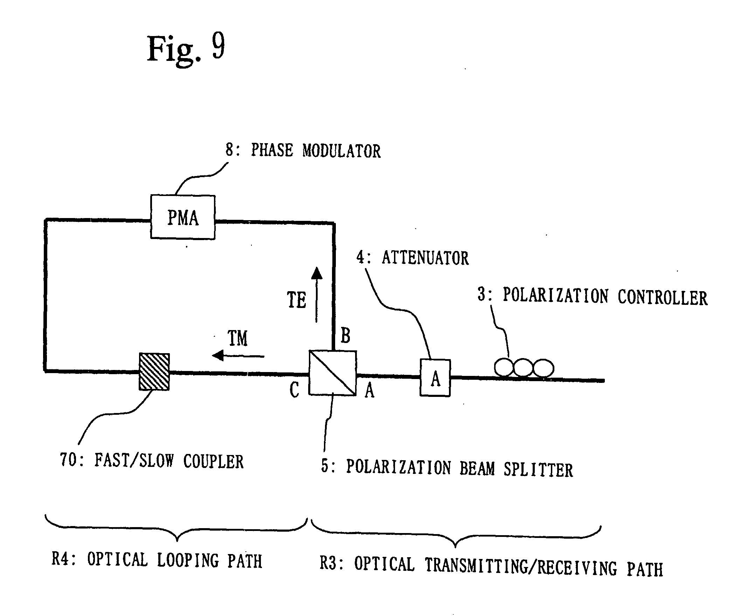

Fig. 9 shows another configuration in which the Faraday mirror 7 is not included.

In Fig. 9, the transmission device is provided with an optical transmitting/receiving path R3 and an optical looping path R4.

The optical transmitting/receiving path R3 is provided with the polarization controller 3, the attenuator 4, and the polarization beam splitter 5. The polarization beam splitter 5 includes three ports A, B, and C. A port is connected to the optical transmitting/receiving path R3. B port is connected to one end of the optical looping path R4. C port is connected to the other end of the optical looping path R4. With this configuration, the optical signal output from B port is input to C port. The optical signal output from C port is input to B port.

Hereinafter, it is defined as "loop flow" to loop the optical signal between B port and C port using the optical looping path R4.

The optical looping path R4 is provided with the phase modulator 8 and a fast/slow coupler 70. The fast/slow coupler 70 changes the TM polarization wave to the TE polarization wave by connecting a fast axis of polarization axis of the optical fiber to a slow axis, and changes the TE polarization wave to the TM polarization wave. The fast/slow coupler 70 is an example of a polarization mode changer.

The light pulse of the TM polarization wave and the light pulse of the TE polarization wave are separated by the polarization beam splitter 5, and the light pulse of the TE polarization wave is directly carried to the phase modulator 8. The light pulse of the TM polarization wave is carried to the other inlet of the phase modulator 8 through the fast/slow coupler 70.

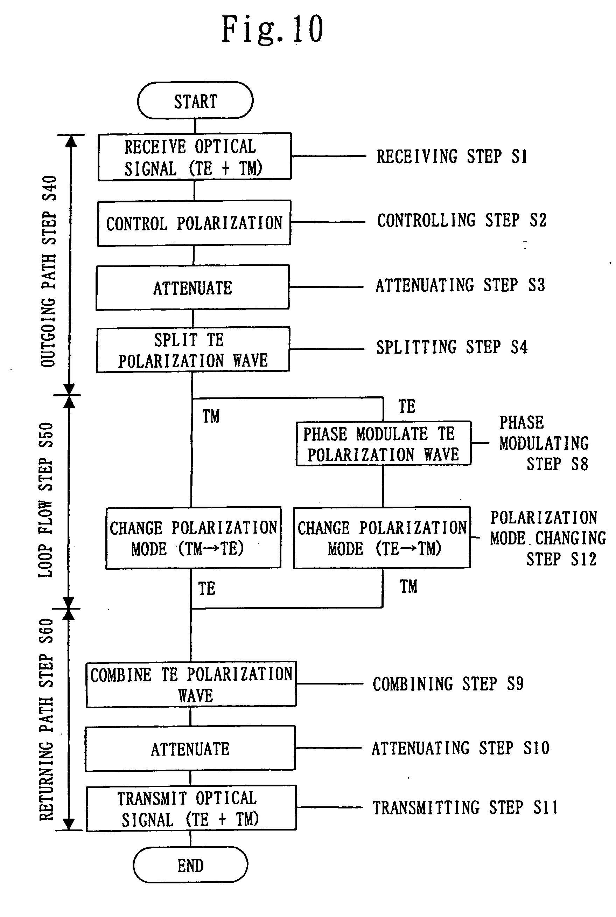

Fig. 10 is a flowchart showing the operation of the quantum cryptography transmission device 100 of Fig. 9.

(1) Step S40 for an outgoing path

The operations of S1 through S4 of the step S40 for an outgoing path shown in Fig. 10 are the same as the operations of S1 through S4 shown in Fig. 2.

(2) Step S50 for a loop flow

The light pulse of the TE polarization wave which is split by the polarization beam splitter 5 is input to the phase modulator 8 and phase modulated (S8). Next, the phase modulated light pulse of the TE polarization wave is input to the fast/slow coupler 70, changed its polarization mode (S12), and output as the light pulse of the TM polarization wave.

On the other hand, the light pulse of the TM polarization wave split by the polarization beam splitter 5 is input to the fast/slow coupler 70, changed its mode to the TE polarization wave from the TM polarization wave (S12), and output. The light pulse of the TE polarization wave output from the fast/slow coupler 70 is input to the phase modulator 8, but is not phase modulated and output to the polarization beam splitter 5 without modulation.

(3) Step S60 for a returning path

The operations of S9 through S11 of the step S60 for a returning path shown in Fig. 10 are the same as the operations of S9 through S11 shown in Fig. 2.

The above-described the steps S40 and S60 for outgoing/returning paths are performed in the optical transmitting/receiving path R3. The step S50 for a loop flow is performed in the optical looping path R4.

Even when the configuration shown in Fig. 9 is used, the light pulse of the TE polarization wave output from B port is returned to C port after passing through the phase modulator 8 only once. Accordingly, the loss of the optical strength can be minimized, which enables the same effect as the foregoing embodiments.

The fast/slow coupler 70 is one example of a polarization mode changer, and another device can be used as long as it can change the polarization wave between TM and TE. For instance, $1/2\lambda$ plate ($\lambda$: wave length) can be used. In another way, the optical communication cable can be used with twisting by 90 degrees. Further, the optical communication cable can be connected with crossing by 90 degrees.

Industrial Applicability

As has been described, according to the quantum cryptography transmission device 100 of Faraday mirror system of preferred embodiment of the invention, the optical paths are provided for outgoing and returning separately within the device, so that the light pulse passes through the phase modulator 8 only once. Accordingly, the loss of the strength can be reduced, and the S/N ratio can be improved at adjusting time of the quantum cryptography transmission device 100, which enables to adjust the transmission device easily.

Further, according to another preferred embodiment of the invention, the optical looping path is used, which avoids using the Faraday mirror and facilitates the configuration of the device.

**Claims**

1. A transmission device for an optical signal comprising:

   a first optical path for receiving the optical signal, being an optical path of the optical signal, and transmitting the optical signal;
   first and second polarization beam splitters provided at the first optical path for splitting the optical signal from the first optical path;
   a second optical path provided between the first and second polarization beam splitters for being an optical path of the optical signal split by the first and second polarization splitters; and
   a phase modulator provided at the second optical path for phase modulating the optical signal.

2. The transmission device for the optical signal of claim 1 further comprising:

   a mirror provided at an end of the first optical path for changing a polarization mode of the optical signal and reflecting the optical signal, and

   wherein the first optical path is used for an outgoing path and a returning path of the optical signal; and
   wherein the second optical path is used for an outgoing path and a returning path of the optical signal which is split by the first and second polarization beam splitters.

3. The transmission device for the optical signal of claim 1, wherein

   the first optical path receives the optical signal having a light pulse of a TE polarization wave and a light pulse of a TM polarization wave,
   the first and second polarization beam splitters split the light pulse of the TE polarization wave, and
   the phase modulator phase modulates the light pulse of the TE polarization wave.

4. A transmission method for an optical signal comprising:

   a splitting step for splitting a TE polarization wave from the optical signal which flows a first optical path and has the TE polarization wave and a TM polarization wave to forward to a second optical path;
   a phase modulating step for phase modulating the TE polarization wave which is split to forward to the second optical path by the splitting step; and

a combining step for combining the TE polarization wave phase modulated by the phase modulating step to the first optical path.

5. The transmission method for the optical signal of claim 4 further comprising an outgoing path step and a returning path step for making the optical signal go and return through the optical path by reflecting the optical signal, and wherein the phase modulating step is performed at the returning path step.

6. A transmission device for an optical signal comprising:

an optical transmitting/receiving path for receiving the optical signal, being an optical path of the optical signal, and transmitting the optical signal;

a polarization beam splitter provided at an end of the optical transmitting/receiving path for splitting the optical signal from the optical transmitting/receiving path;

an optical looping path connected to the polarization beam splitter at both ends for being an optical path which loops the optical signal split by the polarization beam splitter to the polarization beam splitter;

a phase modulator provided at the optical looping path for phase modulating the optical signal; and

a polarization mode changer provided at the optical looping path for changing a polarization mode of the optical signal.

7. The transmission device for the optical signal of claim 6, wherein

the polarization mode changer includes a fast/slow coupler for changing the polarization mode by connecting a fast axis and a slow axis of a polarization wave axis of an optical fiber;

the optical transmitting/receiving path is used for an outgoing path and a returning path for the optical signal; and

the optical looping path is used for an outgoing path and a returning path for the optical signal split by the polarization beam splitter.

8. The transmission device for the optical signal of claim 6,

wherein the optical transmitting/receiving path receives the optical signal having a light pulse of a TE polarization wave and a light pulse of a TM polarization wave, and

wherein the polarization beam splitter splits the light pulse of the TE polarization wave and the light pulse of the TM polarization wave, and the phase modulator phase modulates the light pulse of the TE polarization wave.

9. A transmission method for an optical signal comprising:

a splitting step for splitting the optical signal which flows an optical transmitting/receiving path and having a TE polarization wave and a TM polarization wave and outputting the TE polarization wave and the TM polarization wave to one end and the other end of an optical looping path;

a phase modulating step for phase modulating the TE polarization wave split by the splitting step in the optical looping path; and

a combining step for combining the optical signal output from the one end of the optical looping path and the optical signal output from the other end of the optical looping path.

10. The transmission method for the optical signal of claim 9 further comprising an outgoing path step and a returning path step for making the optical signal go and return through the optical transmitting/receiving path, and a loop flow step for looping the optical signal in the optical looping path, and wherein the phase modulating step is performed at the loop flow step.

# Fig. 1

11: OPTICAL BYPASS PATH

6: POLARIZATION BEAM SPLITTER

5: POLARIZATION BEAM SPLITTER

4: ATTENUATOR

3: POLARIZATION CONTROLLER

R1

TM

10: OPTICAL FIBER FOR COMMUNICATION

A

7: FARADAY MIRROR

8: PHASE MODULATOR

TE

TE

PMA

R2

1: COUPLER

13: OPTICAL MODULATION PATH

2: OPTICAL DETECT

$E_A$

9: CONTROL BOARD A

EP 1 324 101 A1

# Fig. 2

START

| | |
|---|---|
| RECEIVE OPTICAL SIGNAL (TE + TM) | RECEIVING STEP S1 |
| CONTROL POLARIZATION | CONTROLLING STEP S2 |
| ATTENUATE | ATTENUATING STEP S3 |
| SPLIT TE POLARIZATION WAVE | SPLITTING STEP S4 |
| COMBINE TE PORALIZATION WAVE | COMBINING STEP S5 |
| CHANGE POLARIZATION MODE (TE ⇄ TM) AND REFLECT | REFLECTING STEP S6 |
| SPLIT TE POLARIZATION WAVE | SPLITTING STEP S7 |
| PHASE MODULATE TE POLARIZATION WAVE | PHASE MODULATING STEP S8 |
| COMBINE TE POLARIZATION WAVE | COMBINING STEP S9 |
| ATTENUATE | ATTENUATING STEP S10 |
| TRANSMIT OPTICAL SIGNAL (TE + TM) | TRANSMITTING STEP S11 |

OUTGOING PATH STEP S20

RETURNING PATH STEP S30

END

# Fig. 3

# Fig. 4

Fig. 5

# Fig. 6

EP 1 324 101 A1

5 : POLARIZATION BEAM SPLITTER
4 : ATTENUATOR
3 : POLARIZATION CONTROLLER
10 : OPTICAL FIBER FOR COMMUNICATION

6 a : POLARIZATION BEAM SPLITTER

R1

TM

8 : PHASE MODULATOR

TE

TE

A

PMA

R2

7 : FARADAY MIRROR

1 : COUPLER

2 : OPTICAL DETECTOR

# Fig. 7

7: FARADAY MIRROR

10: OPTICAL FIBER FOR COMMUNICATION

56: POLARIZATION BEAM SPLITTER

100: QUANTUM CRYPTOGRAPHY TRANSMISSION DEVICE

200: QUANTUM CRYPTOGRAPHY RECEPTION DEVICE

8: PHASE MODULATOR A

3: POLARIZATION CONTROLLER

61: SHORT OPTICAL PATH

52: PHOTON DETECTOR 1

51: COUPLER

1: COUPLER

PMA

A

53: PHOTON DETECTOR 2

4: ATTENUATOR

62: LONG OPTICAL PATH

PMB

54: POLARIZATION CONTROLLER

60: LASER

2: OPTICAL DETECTOR

58: PHASE MODULATOR B

55: POLARIZATION CONTROLLER

$E_A$

$E_B$

9: CONTROL BOARD A

59: CONTROL BOARD B

57: CIRCULATOR

EP 1 324 101 A1

# Fig. 8

# Fig. 9

8: PHASE MODULATOR

PMA

4: ATTENUATOR

3: POLARIZATION CONTROLLER

TE

TM

B

C          A

A

70: FAST/SLOW COUPLER

5: POLARIZATION BEAM SPLITTER

R4: OPTICAL LOOPING PATH

R3: OPTICAL TRANSMITTING/RECEIVING PATH

EP 1 324 101 A1

# Fig.10

START

| RECEIVE OPTICAL SIGNAL (TE + TM) | —— RECEIVING STEP S1 |

| CONTROL POLARIZATION | —— CONTROLLING STEP S2 |

| ATTENUATE | —— ATTENUATING STEP S3 |

| SPLIT TE POLARIZATION WAVE | —— SPLITTING STEP S4 |

OUTGOING PATH STEP S40

LOOP FLOW STEP S50

TM ___ TE

| PHASE MODULATE TE POLARIZATION WAVE | —— PHASE MODULATING STEP S8 |

| CHANGE POLARIZATION MODE (TM→TE) | | CHANGE POLARIZATION MODE (TE→TM) | POLARIZATION MODE CHANGING STEP S12 |

TE ___ TM

RETURNING PATH STEP S60

| COMBINE TE POLARIZATION WAVE | —— COMBINING STEP S9 |

| ATTENUATE | —— ATTENUATING STEP S10 |

| TRANSMIT OPTICAL SIGNAL (TE + TM) | —— TRANSMITTING STEP S11 |

END

## INTERNATIONAL SEARCH REPORT

International application No.

PCT/JP01/07698

| A. CLASSIFICATION OF SUBJECT MATTER |
|---|
| Int.Cl⁷  G02F 1/01 |

According to International Patent Classification (IPC) or to both national classification and IPC

| B.  FIELDS SEARCHED |
|---|
| Minimum documentation searched (classification system followed by classification symbols)<br>    Int.Cl⁷  G02F 1/01, H04B 10/04, H04L9/00 |

Documentation searched other than minimum documentation to the extent that such documents are included in the fields searched
Jitsuyo Shinan Koho          1922-1996     Toroku Jitsuyo Shinan Koho  1994-2001
Kokai Jitsuyo Shinan Koho  1971-2001     Jitsuyo Shinan Toroku Koho  1996-2001

Electronic data base consulted during the international search (name of data base and, where practicable, search terms used)
    JICST
    USPTO Web Patent Database

| C.  DOCUMENTS CONSIDERED TO BE RELEVANT | | |
|---|---|---|
| Category* | Citation of document, with indication, where appropriate, of the relevant passages | Relevant to claim No. |
| Y | H. Zbinden, H. Bechmann-Pasquinucci, N. Ginsin,<br>G. Ribordy, "Quantum Cryptography", Applied Physics<br>B 67, (1998), pages 743 to 748 | 1-10 |
| Y | JP 09-247086 A (Nippon Telegr. & Teleph. Corp. <NTT>),<br>19 September, 1997 (19.09.97),<br>column 33; Fig. 5   (Family: none) | 1-5 |
| A | JP 05-289124 A (Nippon Telegr. & Teleph. Corp. <NTT>),<br>05 November, 1993 (05.11.93),<br>Fig. 2   (Family: none) | 6-10 |

☐  Further documents are listed in the continuation of Box C.          ☐  See patent family annex.

| * | Special categories of cited documents: | "T" | later document published after the international filing date or |
|---|---|---|---|
| "A" | document defining the general state of the art which is not considered to be of particular relevance | | priority date and not in conflict with the application but cited to understand the principle or theory underlying the invention |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    09 November, 2001 (09.11.01) | Date of mailing of the international search report<br>    20 November, 2001 (20.11.01) |
|---|---|
| Name and mailing address of the ISA/<br>    Japanese Patent Office | Authorized officer |
| Facsimile No. | Telephone No. |

Form PCT/ISA/210 (second sheet) (July 1992)